# EUROPEAN PATENT SPECIFICATION

(11) **EP 1 480 420 B1**
(45) Date of publication and mention of the grant of the patent: **29.03.2006**
(21) Application number: 03011446.6
(22) Date of filing: 20.05.2003
(51) Int. Cl.: H04M 1/247, G06F 3/023

(54) **Language information related keypad input mode control**
Einstellung der Betriebsartauswahl in Abhängigkeit von Sprachinformation
Détermination d'un mode d'introduction par clavier en fonction d'une information de langue

(43) Date of publication of application: 24.11.2004
(73) Proprietor: Sony Ericsson Mobile Communications AB, 221 88 Lund (SE)
(72) Inventor: Camuffo, Andrea, Sony Ericsson Mobile Com. Int. AB, 85609 Aschheim-Dornach (DE)
(74) Representative: Körber, Martin Hans

(56) References cited:
- EP-A- 1 168 859
- EP-A- 1 255 184
- DE-A- 19 928 666
- US-A1- 2002 095 288

## Description

The present invention relates to a control of the keypad input mode for characters on mobile terminals, in particular to a keypad input mode control according to language information associated with a phonebook record.

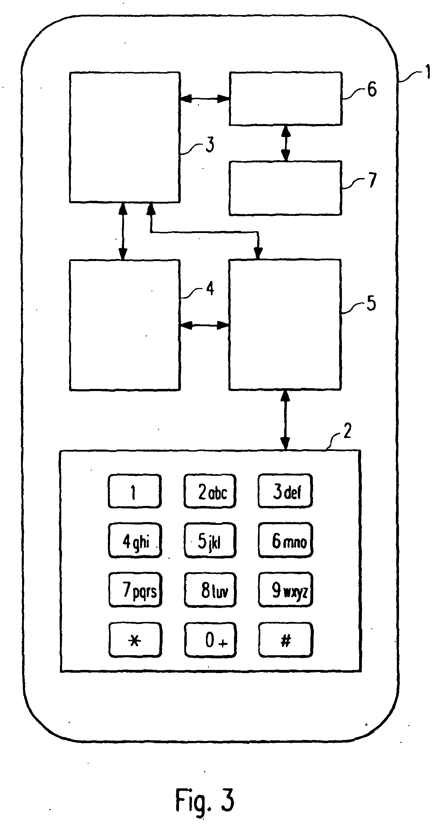

Text entry on mobile terminals, like e.g. a personal digital assistant or a mobile phone is typically based on a standard telephone keypad. The telephone keypad consists of number keys and additional symbol keys with a respective multiple assignation of characters, numbers and/or symbols to allow an entry of text in an alphabetic input mode. The characters a to z and some special characters are hereto spread over a subset of the keys. As an alphabet comprises typically at least 26 characters, three to four characters are grouped on each key resulting in an ambiguous input system. An example for a respective keypad is shown in Fig. 3.

Currently, two different key input modes are typically used on mobile terminals to overcome the ambiguity associated with multiple assigned keys.

The first, which is usually referred to as Multitap or multitap-mode is a general purpose text input method where a user presses each key one or more times to specify the desired character. A key being assigned the characters m, n, and o will have for instance to be pressed once to obtain the character m, twice for character n, and three times for the character o. Problems arise when one character has to be inputted twice or two consecutively inputted characters are provided on the same key. After having entered the first character, a user will usually have to wait for a certain period or will have to press a special key before being able to enter the second character. Although each character is accurately defined, the multitap-mode is generally not well liked by users of a mobile terminal as it is slow and inefficient.

Another way to overcome the ambiguity is to add a dictionary to the system and compare each key input sequence with the words stored in the dictionary to guess the intended word. A respective key input mode technique is known as dictionary-based disambiguation. Commercial examples for this type of text input mode are for instance the T9, eZiText, and iTAP text input models. With dictionary-based disambiguation, each key is pressed only once, thus improving the text input rate.

The guess of the intended text input is based on the probability by which a certain key input sequence corresponds to a certain word. This probability is language dependent. The key input sequence 2-8-3 will, assumed the characters a, b, and c are assigned to key 2, t, u, and v to key 8, and d, e, and f to key 3 most probably result in the word 'bud' when an English dictionary is taken as a basis and 'auf' (means e.g. on) when a German dictionary is used. Therefore, each language requires its own dictionary-based disambiguation model. A dictionary-based disambiguation model comprises not only the dictionary itself but at least also the probabilities, by which each word of the dictionary can be assigned to a certain key input sequence.

Many users of mobile terminals, particularly those who use it for business purposes have to communicate with different parties in different languages. To successfully use the dictionary-based disambiguation technique for text input in various languages, a special dictionary-based disambiguation model has to be available for each language used. When writing a text message like e.g. instance an SMS (text message with Short Message Service) or an MMS (text message with Multimedia Messaging Service) to another party, a user typically writes this message in a language which he prefers for a communication with this party. If this language is different from the one used for text input before, the user is currently required to manually select the appropriate dictionary-based disambiguation model for the new language prior to writing the message. As this is often forgotten, particularly under stress situations, the key input sequences are frequently misinterpreted by the wrongly active dictionary-based disambiguation model thereby annoying the user.

EP 1 255 184 discloses a communication terminal having a predictive text editor application. Hereby, a language information is either specified by a user or by analysing a received text and the keypad input mode is set to a dictionary-based disambiguation mode which is based on a disambiguation model related to said determined language information when accessible or otherwise the keypad input mode is set to a multitap-mode.

DE 199 28 666 A1 discloses an extended phone book for a mobile telephone in which a language information is associated with the phone book entries.

The object of the present invention is to provide an automatic control of the key input mode of a mobile terminal according to the language preferred for a communication with a certain party in a simple and easy way.

The above object is achieved by a method of controlling a keypad input mode for entering a text message on a mobile terminal according to claim 1 and by a mobile terminal according to claim 6.

By automatically setting the proper key input mode according to the language in which a communication to a certain party is preferred, a user of a mobile terminal is prevented from wasting time with writing nonsense text due to a wrongly active dictionary-based disambiguation model and/or searching for an appropriate one.

Advantageous embodiments of the present invention are the subject of the dependent claims.

As most providers support SMS and MMS services, text messages in one of these types are preferred.

The probability of correctly guessing a word intended by entering a certain key sequence is advantageously high when using a disambiguation model formed by the T9, eZiText or iTAP text input method.

For a quick access to the required language information, the language information associated to a phonebook record is preferably stored within the phonebook record itself.

In a preferred embodiment of the present invention, the mobile terminal includes a network access means for accessing a network resource with further phonebook records and/or language information. The network access means may hereto advantageously be adapted to automatically establish a respective network link based on a short range wireless network technology like e.g. a Bluetooth or infrared link, and/or by means of a communication link based network access technology

Advantageously, the mobile terminal is further equipped with a storage means for storing a phonebook and/or a link to a phonebook available on a resource external to the mobile terminal enabling a user to browse for a desired record without having to care for the location where the phonebook records are filed.

In the following, the present invention is described in detail with respect to special embodiments and in relation to the enclosed figures, wherein
- Figure 1: is a flowchart showing the basic steps of a method according to the present invention,
- Figure 2: is a flowchart showing the basic steps to be taken for adding a language information to a phonebook record, and
- Figure 3: is a schematic representation of a mobile terminal according to the present invention.

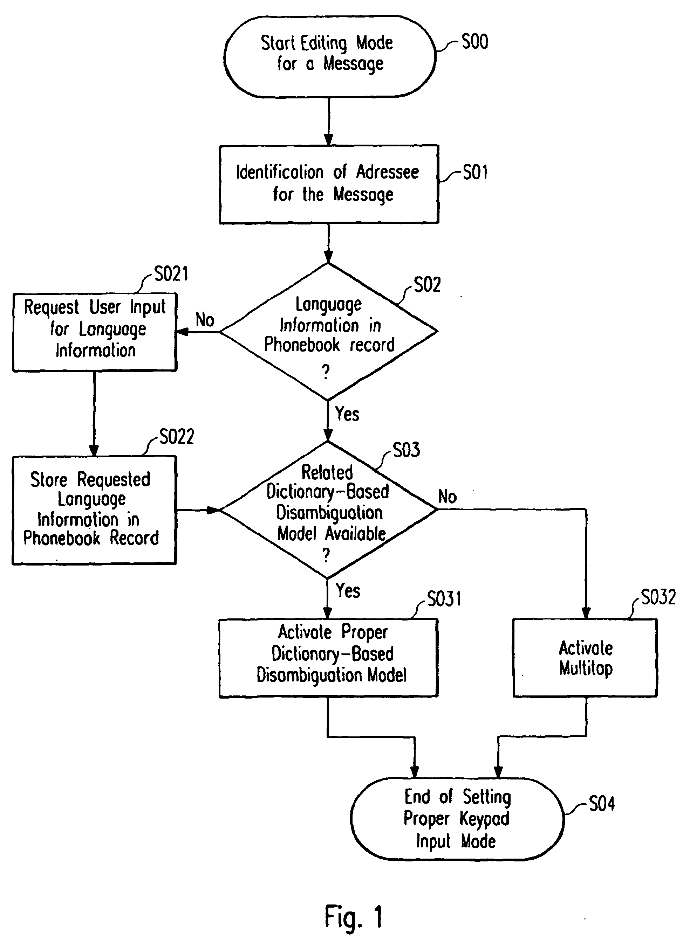

Figure 1 illustrates the basic steps of a method according to the present invention. The most common situation on a mobile terminal for deciding in which language a text should be entered is the preparation of a text message to be sent to another party. But a different situation like for instance writing a note regarding a certain person or a person related schedule record may also require a decision in which language the text is to be written. For entering a text fast and efficiently, a keypad input mode based on a dictionary-based disambiguation model or language model as it is sometimes referred to is preferred. As these models are language dependent, a user will first have to check, which dictionary-based disambiguation model is currently active and probably will then have to select a different one.

As the present invention is based on the notice that the language in which one draws up a text related to a certain person commonly depends on the language in which communications with that person are usually conducted. Therefore, after starting a text editing mode on the mobile terminal in step S00, a relation between a certain party and the text to be written is established in step S01. The party is typically identified from a phonebook of the mobile terminal. To speed-up this identification, the relationship used at last may first be offered by default or, in case the text is written in reply or in response to a call or text message received by another party prior to writing the text, the respective party may be presented first of all. Apart from acting in response to a call, SMS or MMS just received and to be answered, a user input is required for the party identification.

The language information related to the party identified in step S01 is determined next in step S02. The language information is preferably stored within the phonebook record containing the party details or linked to it. Alternatively, the language information may be retrieved from address details in the record as e.g. the country of residence or the like. If no such direct or indirect language information is found in the phonebook record, the user will be requested in step S021 for a manual input of the desired information. The inputted information is then conveniently stored within the respective phonebook record or linked to it in step S022 before the method proceeds to step S03, which also follows step S02 directly if the language information has been available from the phonebook record.

If a user is not interested in providing language information according to the procedure set forth in steps S021 and S022, he or she may skip this part and a default value for the language information is used instead. The default may either be the language preferred by the user himself or an indication that no particular language is specified.

Once the language information associated to the phonebook record selected in step S01 is determined, a search for an appropriate dictionary-based disambiguation model available on the mobile terminal is started in step S03. Appropriate means in this context, that the respective dictionary-based disambiguation model supports the language defined by the language information. If an appropriate dictionary-based disambiguation model is found, the keypad input mode will be set on a dictionary-based disambiguation mode based on this model in step S031. Else, the keypad input mode will be set on multitap disambiguation mode in step S032. In both cases, the setting of a proper keypad is completed in step S04.

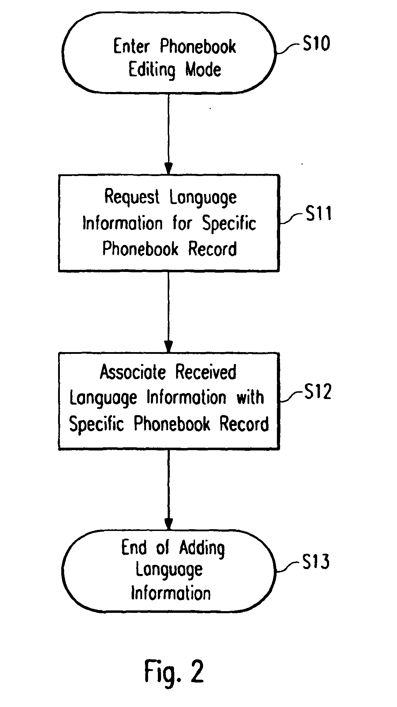

Each language information is advantageously linked to its respective phonebook record or stored directly therein. As common mobile terminals do currently not manage language information in their phonebooks, a procedure shown in Figure 2 may be provided on the mobile terminal. Following the start of a phonebook editing mode in step S10, a user will in step S11 be requested to provide language information for each phonebook record edited before closing it. The entered language information is then associated with the respective phonebook record by either storing it in the database element representing the record or establishing a link to it in step S12 prior to the procedure being completed in step S13.

As sometimes no phonebook record is available for a certain party, particularly when replying to an enquiry in form of an SMS received from a prospective, the language information can be determined automatically from the received text by means of a text language recognition- system. Respective systems are for instance described in US 2002/0095288 A1. A first system presented therein is based on a Discrete Markov Model, which analyses the transition probabilities between consecutive characters. As these probabilities are strongly language dependent, the language used predominantly in a text can be guessed. A further therein proposed system counts the matches from words of the received text with words of the dictionaries of language models from dictionary-based disambiguation models like e.g. T9™ or ZiCorp™. Alternatively, the language recognition may also be based on certain keywords like e.g. "Dear", "Egregi", "geehrt" or the like as described in EP 0 984 427 A2. The keypad input mode will then be set according to the recognition result.

A method with one or more procedures described may be realised as a software implemented control of a mobile terminal. The software may be stored in a data storage of the mobile terminal or separate from it on a different data carrier which can be accessed from the mobile phone if desired.

Currently, most providers offer messaging services based on SMS or MMS. As the present invention is not restricted to the type of messaging service, it may also be applied to messages of different technologies as long a the messages contain text.

Figure 3 is a schematic block diagram showing the components required for a mobile terminal 1 according to the present invention. It is to be noted that only those components necessary for the understanding of the present invention are shown. Other components required for the operation of the mobile terminal 1, like a display, antenna, transceiver or the like have been omitted for the sake of a clear illustration.

The mobile terminal 1 has a keypad 2 formed by an array of keys which are usually used for entering a number or special characters. Some of the keys may also be provided to control certain functions on the mobile terminal 1. In text mode, some keys have a further assignment, whereby at least on one key more than one characters are grouped. Typically, as indicated in Figure 3, three to four characters are grouped on one key, which is the reason for the input ambiguity. The mobile terminal 1 further possesses a selecting means 3 for selecting a record from a phonebook available on the mobile terminal 1 as described above in conjunction with Figure 1. The language determination means 4 allows to determine a language information associated with a record selected from a phonebook available on the mobile terminal I.

Usually, a phonebook is stored in a storage unit 6 like a memory unit of the mobile terminal 1 itself or a on a SIM (Subscriber Identity Module) card inserted into the respective mobile terminal 1. Due to limited storage capacity available on the mobile terminal 1 or due to a need for managing a phonebook in a context sensitive manner, resources external to the mobile terminal may be used. A user may for instance use a customer database available on a network of his company which data are too sensitive for being transferred on the user's mobile terminal 1. According to an advantageous further development of the present invention, a network access unit 7 is therefore provided on the mobile terminal which enables an automatic set-up of a network link when a phonebook kept separate from the mobile terminal is accessed. The link may be established in response to activating a phonebook link on the mobile terminal or as soon as a user browses for a phonebook entry.

A network link itself may e.g. be based on a communication link to the communication network of a provider such, that web resources are accessed on the basis of the wireless application protocol (WAP). In a further development of the present invention also a short range wireless link to a private or company network, for instance by means of Bluetooth or infrared technology, is used to benefit from local network resources in the vicinity of the mobile terminal. The latter is particularly useful when the required phonebook content is sensitive to the context of the respective work environment.

If a certain language model not available on the mobile terminal 1 has to be used for analysing the text of a received message or to set the keypad input mode on the appropriate disambiguation mode, the network access unit 7 may further be used to make the required language model available for the mobile terminal.

A keypad control 5 is provided on the mobile terminal 1 to control the interpretation of keystrokes on the keypad 2 in terms of at least controlling the keypad input mode according to the language information determined by the language determination means 4. The respective keypad input mode is set by the keypad control 5 to a dictionary-based disambiguation mode which is based on a disambiguation model related to said determined language information when accessible or otherwise to multitap-mode.

## Claims

1. A method of controlling a keypad input mode for entering a text message on a mobile terminal, the method comprising the steps of:
- determining (S02, S02I , S022) a language information associated with a phonebook record selected (S01) from a phonebook available on the mobile terminal, and
- setting (S031, S032) the keypad input mode to a dictionary-based disambiguation mode which is based on a disambiguation model related to said determined language information when accessible or otherwise setting the keypad input mode to multitap-mode,
whereby the language information associated to a phonebook record is extracted automatically from a text message received earlier from a party represented by the selected phonebook record.

2. Method according to claim 1,
**characterised in**
**that** the text message is of an SMS or MMS type.

3. Method according to claim 1 or 2,
**characterised in**
**that** the disambiguation model is formed by a T9 text input method, eZiText text input method or iTAP text input method.

4. Method according to claim 1, 2 or 3,
**characterised in**
**that** the language information associated to a phonebook record is stored within the phonebook record itself.

5. Method according to one of the claims 1 to 4,
**characterised in**
**that**, if no language information is associated to a phonebook record, the language information is determined by a default value or a user input requested.

6. A mobile terminal with
- a keypad (2) having at least one key to which more than one character is assigned for alphabetic input,
- a selecting means (3) for selecting a record from a phonebook available on the mobile terminal (1),
- a language determination means (4) for determining a language information associated with a phonebook record selected, and
- a keypad control means (5) for controlling at least the keypad input mode of the mobile terminal,
whereby the keypad control means (5) is adapted to set the keypad input mode to a dictionary-based disambiguation mode which is based on a disambiguation model related to said determined language information when accessible or otherwise setting the keypad input mode to multitap-mode,
the mobile terminal further comprising a text language recognition system adapted to automatically extract the language information associated to a phonebook record from a text message received earlier from a party represented by the selected phonebook record.

7. A mobile terminal according to claim 6,
**characterised in**
**that** the mobile terminal (1) comprises a network access means (7) for accessing a network resource.

8. A mobile terminal according to claim 7,
**characterised in**
**that** the network access means (7) is based on a short range wireless network link technology and/or a communication link network link technology.

9. A mobile terminal according to claim 6, 7 or 8,
**characterised in**
**that** the mobile terminal (1) comprises a storage means (6) for storing a phonebook and/or a link to phonebook available on a resource external to the mobile terminal.

## Patentansprüche

1. Verfahren zum Steuern eines Tastatureingabemodus zum Eingeben einer Textnachricht an einem Mobiltelefon, wobei das Verfahren die Schritte aufweist:
- Bestimmen (S02, S021, S022) einer Sprachinformation, die zu einem Telefonbucheintrag gehört, der aus einem an dem Mobiltelefon zur Verfügung stehenden Telefonbuch ausgewählt (S01) wird, und
- Einstellen (S031, S032) des Tastatureingabemodus in einen wörterbuch-basierten Begriffsmodus, der auf einem Begriffsmodell basiert, das sich auf die bestimmten Sprachinformationen bezieht, wenn sie verfügbar sind, oder sonst Einstellen des Tastatureingabemodus in den Multitap-Modus,
wobei die zu einem Telefonbucheintrag gehörenden Sprachinformationen automatisch aus einer Textnachricht extrahiert werden, die früher von einem Dritten empfangen wurde, der durch den ausgewählten Tetefonbucheintrag repräsentiert wird.

2. Verfahren nach Anspruch 1,
**dadurch gekennzeichnet,**
**dass** die Textnachricht von einem SMS- oder einem MMS-Typ ist.

3. Verfahren nach Anspruch 1 oder 2,
**dadurch gekennzeichnet,**
**dass** das Begriffsmodell durch ein T9-Texteingabeverfahren, ein eZiText-Texteingabeverfahren oder ein iTAP-Texteingabeverfahren gebildet ist.

4. Verfahren nach Anspruch 1, 2 oder 3,
**dadurch gekennzeichnet,**
**dass** die zu einem Telefonbucheintrag gehörenden Sprachinformationen in dem Telefonbucheintrag selbst gespeichert sind.

5. Verfahren nach einem der Ansprüche 1 bis 4,
**dadurch gekennzeichnet,**
**dass**, falls keine Sprachinformationen zu einem Telefonbucheintrag gehören, die Sprachinformationen durch einen Vorgabewert oder eine angeforderte Benutzereingabe bestimmt werden.

6. Mobiltelefon, mit
- einer Tastatur (2) mit wenigstens einer Taste, der mehr als ein Zeichen zugeordnet ist, zur alphabetischen Eingabe,
- einer Auswahleinrichtung (3) zum Auswählen eines Eintrags aus einem an dem Mobiltelefon (1) zur Verfügung stehenden Telefonbuch,
- einer Sprachbestimmungseinrichtung (4) zum Bestimmen einer Sprachinformation, die zu einem ausgewählten Telefonbucheintrag gehört, und
- einer Tastatursteuereinrichtung (5) zum Steuern wenigstens des Tastatureingabemodus des Mobiltelefons,
wobei die Tastatursteuereinrichtung (5) ausgebildet ist, um den Tastatureingabemodus in einen wörterbuch-basierten Begriffsmodus zu setzen, der auf einem Begriffsmodell basiert, das sich auf die bestimmten Sprachinformationen bezieht, wenn sie verfügbar sind, oder sonst den Tastatureingabemodus in den Multitap-Modus zu setzen,
wobei das Mobiltelefon ferner ein Textspracherkennungssystem aufweist, das ausgebildet ist, um automatisch die zu einem Telefonbucheintrag gehörenden Sprachinformationen aus einer Textnachricht zu extrahieren, die früher von einem Dritten empfangen wurde, der durch den ausgewählten Telefonbucheintrag repräsentiert wird.

7. Mobiltelefon nach Anspruch 6,
**dadurch gekennzeichnet,**
**dass** das Mobiltelefon (1) eine Netzzugangseinrichtung (7) zum Zugriff auf eine Netzwerkquelle aufweist.

8. Mobiltelefon nach Anspruch 7,
**dadurch gekennzeichnet,**
**dass** die Netzzugangseinrichtung (7) auf einer kurzreichweitigen, drahtlosen Netzwerkverbindungstechnik und/oder einer Nachrichtenverbindungs-Netzwerkverbindungstechnik basiert.

9. Mobiltelefon nach Anspruch 6, 7 oder 8,
**dadurch gekennzeichnet,**
**dass** das Mobiltelefon (1) eine Speichereinrichtung (6) zum Speichern eines Telefonbuchs und/oder eine Verbindung zu einem an einer dem Mobiltelefon externen Quelle zur Verfügung stehenden Telefonbuch aufweist.

## Revendications

1. Procédé de commande d'un mode d'entrée au clavier, destiné à la saisie d'un message texte sur un terminal mobile, le procédé comprenant les étapes consistant à :
- déterminer (S02, S021, S022) une information de langue associée à un enregistrement d'annuaire téléphonique sélectionné (S01) dans un annuaire téléphonique disponible sur le terminal mobile, et
- paramétrer (S031, S032) le mode d'entrée au clavier avec un mode de désambiguïsation fondé sur un dictionnaire, qui est basé sur un modèle de désambiguïsation lié à ladite information de langue déterminée lorsque celle-ci est accessible ou sinon sélectionner pour le mode d'entrée au clavier le mode à frappes multiples (« *multitap* »),
dans lequel l'information de langue associée à un enregistrement de l'annuaire téléphonique est extraite automatiquement d'un message texte reçu antérieurement en provenance d'une partie qui est représentée par l'enregistrement sélectionné dans l'annuaire téléphonique.

2. Procédé selon la revendication 1, **caractérisé en ce que** le message texte est du type SMS ou MMS.

3. Procédé selon la revendication 1 ou 2, **caractérisé en ce que** le modèle de désambiguïsation est formé par un procédé d'entrée de texte T9, un procédé d'entrée de texte eZiText ou un procédé d'entrée de texte iTAP.

4. Procédé selon la revendication 1, 2 ou 3, **caractérisé en ce que** l'information de langue associée à l'enregistrement de l'annuaire téléphonique est stockée dans l'enregistrement de l'annuaire téléphonique lui-même.

5. Procédé selon l'une quelconque des revendications 1 à 4, **caractérisé en ce que**, si aucune information de langue n'est associée à un enregistrement de l'annuaire téléphonique, l'information de langue est déterminée par une valeur par défaut ou une entrée demandée à l'utilisateur.

6. Terminal mobile comprenant :
- un clavier (2) ayant au moins une touche à laquelle est attribué plus d'un caractère pour la saisie alphabétique,
- un moyen de sélection (3), destiné à sélectionner un article dans un annuaire téléphonique disponible sur le terminal mobile (1),
- un moyen de détermination de langue (4), destiné à déterminer une information de langue associée à un article sélectionné dans l'annuaire téléphonique, et
- un moyen de commande de clavier (5), destiné à commander au moins le mode d'entrée au clavier du terminal mobile,
dans lequel le moyen de commande de clavier (5) est adapté pour paramétrer le mode d'entrée au clavier avec un mode de désambiguïsation fondé sur un dictionnaire, qui est basé sur un modèle de désambiguïsation lié à ladite information de langue déterminée lorsque celle-ci est accessible ou sinon paramétrer le mode d'entrée au clavier en mode à frappes multiples (« *multitap* »),
le terminal mobile comprenant en outre un système de reconnaissance de la langue d'un texte, adapté pour extraire automatiquement l'information de langue associée à un enregistrement de l'annuaire téléphonique à partir d'un message texte reçu antérieurement en provenance d'une partie qui est représentée par l'enregistrement sélectionné dans l'annuaire téléphonique.

7. Terminal mobile selon la revendication 6, **caractérisé en ce que** le terminal mobile (1) comprend un moyen d'accès au réseau (7) destiné à accéder à une ressource en réseau.

8. Terminal mobile selon la revendication 7, **caractérisé en ce que** le moyen d'accès au réseau (7) est fondé sur une technologie de liaison au réseau de type sans fil à courte portée et/ou une technologie de liaison au réseau de type liaison de communication.

9. Terminal mobile selon la revendication 6, 7 ou 8, **caractérisé en ce que** le terminal mobile (1) comprend un moyen de stockage (6) destiné à stocker un annuaire téléphonique et/ou une liaison à un annuaire téléphonique disponible sur une ressource extérieure au terminal mobile.
